# EUROPÄISCHE PATENTANMELDUNG

(11) **EP 3 770 465 A1**
(43) Veröffentlichungstag der Anmeldung: **27.01.2021**
(21) Anmeldenummer: 20185499.9
(22) Anmeldetag: 13.07.2020
(51) Int. Cl.: F16H 37/08

(54) **GETRIEBE**

(30) Priorität: 22.07.2019 DE 102019210847
(71) Anmelder: Deere & Company, Moline, IL 61265 (US)
(72) Erfinder: Raisch, Stefan, 68163 Mannheim (DE)
(74) Vertreter: Stein, Stefan

(57) **Zusammenfassung**

Die Erfindung betrifft ein Getriebe mit einer ersten und einer zweiten Welle und einer zwischen den Wellen angeordneten Schaltgruppe, wobei die Schaltgruppe derart ausgebildet ist, dass eine über die erste Welle eingebrachte mechanische Leistung über einen ersten und/oder über einen zweiten zu- oder abkoppelbaren Leistungspfad auf die zweite Welle übertragbar ist, wobei der erste Leistungspfad als Vorwärtsgang und der zweite Leistungspfad als Rückwärtsgang eingerichtet ist, und wobei der Vorwärtsgang ein betragsmäßig unterschiedliches Übersetzungsverhältnis aufweist als der Rückwärtsgang. Erfindungsgemäß weist die Schaltgruppe eine Summierungsplanetenstufe auf, über die die mechanische Leistung der Leistungspfade auf die zweite Welle übertragbar ist.

## Beschreibung

Die Erfindung betrifft ein Getriebe mit einer ersten und einer zweiten Welle und einer zwischen den Wellen angeordneten Schaltgruppe, die derart ausgebildet ist, dass eine über die erste Welle eingebrachte mechanische Leistung über einen ersten und/oder über einen zweiten zu- oder abkoppelbaren Leistungspfad auf die zweite Welle übertragbar ist, wobei der erste Leistungspfad als Vorwärtsgang und der zweite Leistungspfad als Rückwärtsgang eingerichtet ist und wobei der Vorwärtsgang ein betragsmäßig unterschiedliches Übersetzungsverhältnis aufweist als der Rückwärtsgang.

Getriebe mit einer derartigen Schaltgruppe sind grundsätzlich aus dem Stand der Technik bekannt und dienen der Realisierung von zumindest einem Vorwärts- und zumindest einem Rückwärtsgang. Üblicherweise sind dieser Schaltgruppe weitere Schaltgruppen vor- oder nachgeordnet, sodass eine Vielzahl unterschiedlicher Gänge realisiert werden kann, die sich aber in ihrem Übersetzungsverhältnis voneinander unterscheiden, um möglichst geringe Lastsprünge während des Schaltens gewährleisten zu können.

Insbesondere bei Landmaschinen ist es aber häufig erforderlich, einen speziellen Kriechgang vorzusehen, der sehr langsame Fahrgeschwindigkeiten ermöglicht. Ein derartiger Kriechgang dient bei Fahrzeugen dem Langsam fahren, ohne dass eine schleifende Kupplung notwendig ist. Typische Einsatzgebiete liegen beispielsweise bei einem Betrieb in unwegsamem Gelände, bei Schwerlasttransporten oder aber auch bei Arbeiten im landwirtschaftlichen Bereich. So weisen gerade Landmaschinen häufig einen Kriechgang auf, über den Geschwindigkeiten deutlich unter 1 km/h erreicht werden und über den beispielsweise langsame Feldarbeiten möglich sind. Bislang wurde ein solcher Kriechgang üblicherweise über eine separate Getriebestufe erreicht, die ein Übersetzungsverhältnis im Bereich von 10 aufweist. Dies setzt entsprechend zusätzliche Stirnradsätze mit mehreren Wellen und Zahnrädern sowie eine zusätzliche Schaltwelle voraus, wodurch das Getriebe insgesamt eine große Baugröße aufweist und zugleich die Produktionskosten gegenüber einem Getriebe ohne Kriechgang deutlich ansteigen lässt.

Insgesamt sind daher die bislang bekannten Getriebe mit Kriechgang verbesserungswürdig, sodass der vorliegenden Erfindung die Aufgabe zugrunde liegt, ein Getriebe bereitzustellen, das einen Kriechgang bereitstellt und das sich gegenüber bislang bekannten Getrieben durch eine verringerte Bauform und durch geringere Produktionskosten auszeichnet.

Diese Aufgabe wird gelöst durch ein Getriebe gemäß Patentanspruch 1, wobei erfindungsgemäß die Schaltgruppe eine Summierungsplanetenstufe aufweist, über die die mechanische Leistung der Leistungspfade auf die zweite Welle übertragbar ist. Planetenstufen bestehen aus mehreren koaxial zueinander angeordneten Planeteneinheiten, die relativ zueinander rotierbar sind. Bei diesen Planeteneinheiten kann es sich um ein Sonnenrad, einen Planetenträger oder um ein Hohlrad handeln. Das Sonnenrad ist zentral in der Planetenstufe angeordnet und demnach lediglich in der Lage eine Rotationsbewegung um sich selbst durchzuführen. Auf diesem Sonnenrad sind mehrere Planetenräder angeordnet, die wiederum über einen gemeinsamen Planetenträger miteinander verbunden sind. Demnach können die Planeten einerseits eine Rotation um sich selbst und andererseits eine Rotation um das Sonnenrad herum ausführen. An die Planeten kann sodann ein Hohlrad anschließen. Sowohl das Hohlrad als auch der Planetenträger und das Sonnenrad weisen demnach eine gemeinsame Rotationsachse auf. Hierdurch ist es möglich, die Rotationsbewegungen aus dem ersten Leistungspfad und dem zweiten Leistungspfad miteinander zu kombinieren.

Erfindungsgemäß unterscheiden sich der erste und der zweite Leistungspfad dahingehend voneinander, dass der erste Leistungspfad als Vorwärtsgang und der zweite Leistungspfad als Rückwärtsgang ausgebildet ist, sodass beide Leistungspfade eine entgegengesetzte Rotationsrichtung aufweisen. Sofern nunmehr beide Leistungspfade über die Summierungsplanetenstufe miteinander kombiniert werden, führt dies dazu, dass sich die Rotationsbewegungen zu einem großen Anteil ausgleichen, wobei jedoch durch das unterschiedliche Übersetzungsverhältnis in den beiden Leistungspfaden weiterhin eine geringfügige Rotation entweder in Vorwärts- oder in Rückwärtsrichtung einsetzt. Durch die geschickte Wahl von Übersetzungsverhältnissen lässt sich somit erfindungsgemäß ein Kriechgang ausbilden, der allein auf der Kopplung des Vorwärts- und des Rückwärtsganges basiert, ohne dass weitere Komponenten, z. B. zusätzliche Stirnradstufen, erforderlich sind. Zur Realisierung des Kriechgangs ist es zwingend erforderlich, dass sowohl der erste als auch der zweite Leistungspfad in einem zugekoppelten Zustand sind. Zugekoppelt meint in diesem Zusammenhang, dass ein Drehmoment bzw. eine Leistung über den entsprechenden Leistungspfad übertragen werden kann. Dies erfolgt üblicherweise durch Betätigung von Schalteinrichtungen in Form von Kupplungen, wobei in jedem Leistungspfad eine Schalteinrichtung vorgesehen ist, über die dann der entsprechende Leistungspfad zu- oder abkoppelbar ist.

Bevorzugt weist auch die Summierungsplanetenstufe eine Schalteinrichtung auf, die derart eingerichtet ist, dass entweder der erste und der zweite Leistungspfad unmittelbar miteinander oder jeweils einer der Leistungspfade mit einem Ausgangspfad der Summierungsplanetenstufe koppelbar sind, wobei der Ausgangspfad mit der zweiten Welle in Verbindung steht. Eine derartige Schalteinrichtung ist notwendig, damit anstelle des Kriechgangs auch eine normale Vorwärts- oder Rückwärtsfahrt möglich ist. Sofern beispielsweise die beiden Leistungspfade in der Summierungsplanetenstufe miteinander gekoppelt werden, führt dies dazu, dass die mit den Leistungspfaden in Verbindung stehenden Planeteneinheiten die gleiche Rotationsbewegung ausführen und somit keine Relativbewegung zwischen den einzelnen Planeteneinheiten vorliegt. Demnach kann über die Summierungsplanetenstufe auch keine Übersetzung erfolgen, sodass folglich eine Direktübertragung des Drehmomentes von dem entsprechenden Leistungspfad auf den Ausgangspfad erfolgt.

Hierbei ist es wesentlich, dass für eine Vorwärtsfahrt der erste Leistungspfad zugekoppelt ist und die Schalteinrichtung der Summierungsplanetenstufe betätigt ist. Der zweite Leistungspfad ist hingegen nicht zugekoppelt. Entsprechend würde bei einer Rückwärtsfahrt bzw. bei Einlegen des Rückwärtsganges der erste Leistungspfad abgekoppelt und der zweite Leistungspfad zugekoppelt, während die Schalteinrichtung der Planetenstufe weiterhin betätigt wird.

Die Art und Weise, wie die beiden Planeteneinheiten des ersten und des zweiten Leistungspfades gegeneinander blockiert werden können, hängt im Wesentlichen davon ab, wie die Schalteinrichtung ausgebildet ist. Besonders geeignet sind hierbei Klauenkupplungen, Lamellenkupplungen oder Synchronisiereinheiten. Lamellenkupplungen haben den großen Vorteil, dass die Drehzahlen aus dem ersten und dem zweiten Leistungspfad bei Betätigung der Kupplung angeglichen werden können, obwohl das Getriebe weiterhin unter Last steht. Dies wird dadurch ermöglicht, dass die Lamellenkupplung aus einer radial innenliegenden Lamellenwelle und einem radial außenliegenden Lamellenträger besteht. Sowohl die Lamellenwelle als auch der Lamellenträger weisen radial vorstehende Lamellen auf, die bei Betätigung der Kupplung axial gegeneinandergedrückt werden, sodass eine Reibverbindung zwischen dem Lamellenträger und der Lamellenwelle erzeugt wird. Bevorzugt stehen bei einer solchen Ausgestaltung der Lamellenträger und die Lamellenwelle mit jeweils einem der Leistungspfade und jeweils einer der Planeteneinheiten der Summierungsplanetenstufe in Verbindung.

Im Gegensatz zu einer Lamellenkupplung kann eine Synchronisiereinheit zwar eine Angleichung der Rotationsbewegungen bewirken, allerdings ist dies nicht unter Last möglich. Bei einer Synchronisiereinheit werden ähnlich wie bei einer Lamellenkupplung zwei koaxial zueinander angeordnete und rotierbare Wellen über einen Synchronring stirnseitig kontaktiert, wobei der Synchronring einen Reibschluss zwischen den einzelnen Wellen ausbildet und zu einer Synchronisierung der Rotationsgeschwindigkeiten führt. Analog zu der Lamellenkupplung stehen die Wellen jeweils mit einem der Leistungspfade und einer der Planeteneinheiten der Summierungsplanetenstufe in Verbindung.

Im Gegensatz zu einer Lamellenkupplung und einer Synchronisiereinheit ist mittels einer Klauenkupplung keine Synchronisierung der Rotationsgeschwindigkeit möglich. Somit muss zur Betätigung dieser Kupplung zunächst das Getriebe in den Stillstand gebracht werden, wobei erst im Stillstand eine Betätigung der Klauenkupplung erfolgen kann.

Wie bereits zuvor erläutert, kann die Summierungsplanetenstufe unterschiedlich ausgebildet sein, wobei zumindest zwei koaxial zueinander angeordnete Planeteneinheiten für die Anbindung der einzelnen Leistungspfade vorgesehen sind. Besonders bevorzugt sind die Planeteneinheiten als Sonnenrad und als Planetenträger ausgebildet, wobei der Planetenträger das Sonnenrad mittels mehrerer einzelner Planeten umläuft. Für die Ausbildung des Ausgangspfades weist die Summierungsplanetenstufe bevorzugt einen zweiten Planetenträger auf, wobei die Planetenträger unmittelbar miteinander gekoppelt sind und wobei der zweite Planetenträger mit der zweiten Welle in Verbindung steht. Die Anbindung an die zweite Welle kann entweder unmittelbar oder mittelbar über ein zweites Sonnenrad erfolgen, das über den zweiten Planetenträger angetrieben wird.

Gemäß einer Ausgestaltungsvariante ist der erste und/oder der zweite Leistungspfad jeweils aus einer Wellenanordnung gebildet, der entweder unmittelbar oder unter Einbindung eines Stirnradsatzes mit der Summierungsplanetenstufe verbunden ist und wobei die Wellenanordnung jeweils eine Schalteinrichtung aufweist, über die die Wellenanordnung zu- oder abgekoppelt werden kann. Mit Hilfe eines solchen Stirnradsatzes kann innerhalb des jeweiligen Leistungspfades ein bestimmtes Übersetzungsverhältnis eingestellt werden. Eine Zu- bzw. Abkopplung des entsprechenden Leistungspfades kann beispielsweise dadurch erfolgen, dass bei einem Zahnradpaar der Stirnradstufe zumindest eines der Zahnräder auf einem koaxial zu einer Welle angeordneten Koaxialwellenabschnitt angeordnet ist, wobei mit Hilfe einer Kupplung der Koaxialwellenabschnitt mit der innenliegenden Welle in Verbindung gebracht werden kann.

Alternativ kann der erste und der zweite Leistungspfad auch über eine Verzweigungsplanetenstufe gebildet werden.

Die Schaltgruppe kann darüber hinaus einen dritten Leistungspfad aufweisen, wobei der dritte Leistungspfad als Vorwärtsgang oder aber als Rückwärtsgang ausgebildet ist und der gegenüber dem ersten Leistungspfad im Falle eines Vorwärtsganges oder gegenüber dem zweiten Leistungspfad im Falle eines Rückwärtsganges ein unterschiedliches Übersetzungsverhältnis aufweist.

Darüber hinaus kann die Schaltgruppe auch eine zweite Summierungsplanetenstufe aufweisen, wobei beide Summierungsplanetenstufen mit dem ersten und dem zweiten Leistungspfad in Verbindung stehen.

Die vorliegende Erfindung wird nachfolgend anhand exemplarischer Zeichnungen näher erläutert. Es zeigen:
- Figur 1: eine Prinzipskizze des erfindungsgemäßen Getriebes,
- Figuren 2, 3 und 4: unterschiedliche Ausgestaltungen der Erfindung mit jeweils einem ersten und einem zweiten Leistungspfad,
- Figur 5: eine Prinzipskizze des Getriebes mit einem dritten Leistungspfad.

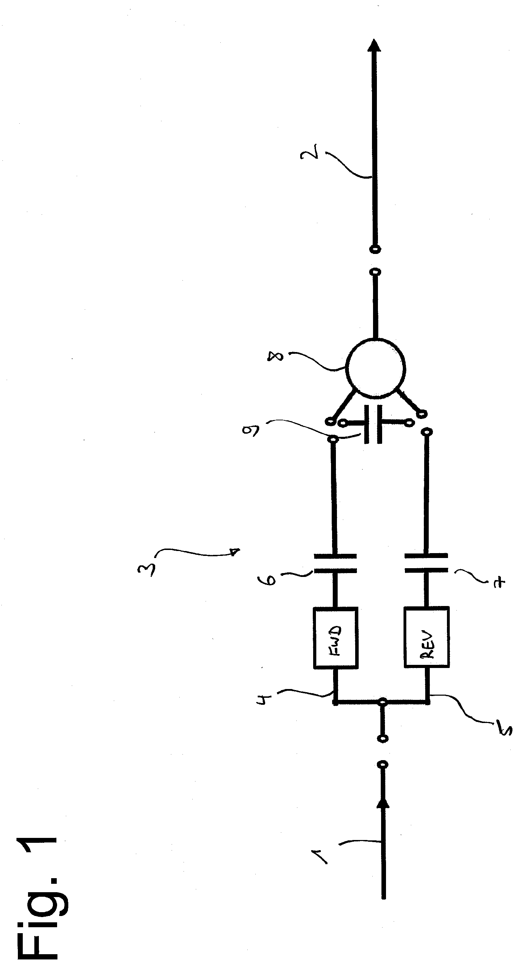

Die Figur 1 zeigt eine Prinzipskizze des erfindungsgemäßen Getriebes mit einer ersten Welle 1 und einer zweiten Welle 2, wobei zwischen den Wellen eine Schaltgruppe 3 angeordnet ist, die derart ausgebildet ist, dass eine über die erste Welle 1 eingebrachte mechanische Leistung in einen ersten Leistungspfad 4 und in einen zweiten Leistungspfad 5 verzweigt wird, wobei der erste Leistungspfad 4 als Vorwärtsgang (FWD) und der zweite Leistungspfad 5 als Rückwärtsgang (RWD) ausgebildet ist.

In jedem der Leistungspfade 4, 5 ist zudem eine Kupplung oder eine sonstige Schalteinrichtung 6, 7 vorgesehen, über die der jeweilige Leistungspfad 4, 5 zu- oder abkoppelbar ist.

Die beiden Leistungspfade werden sodann in einer Summierungsplanetenstufe 8 vereinigt, sodass die mechanische Leistung auf die zweite Welle 2 übertragen werden kann. Gemäß dem Ausführungsbeispiel der Figur 1 ist ferner eine Schalteinrichtung 9 vorgesehen, durch die die beiden Leistungspfade 4, 5 vor oder unmittelbar in der Summierungsplanetenstufe 8 miteinander gekoppelt werden können.

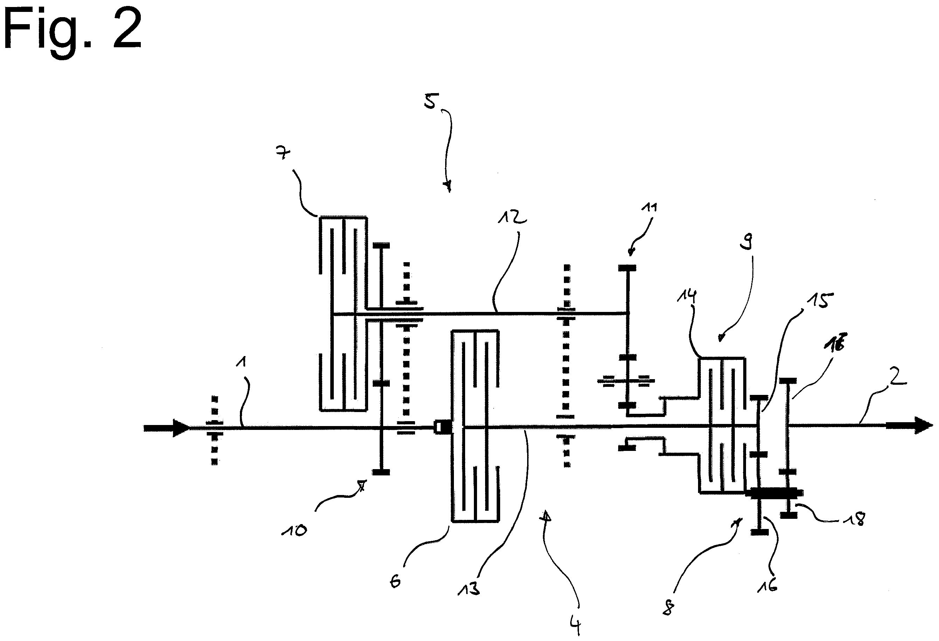

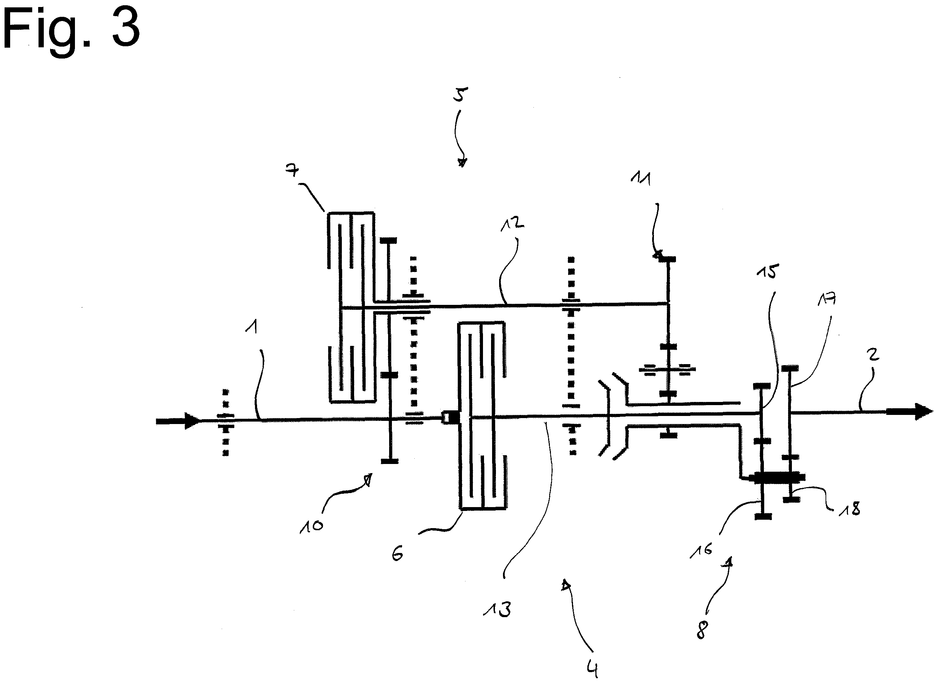

Die Figuren 2 und 3 zeigen mögliche Ausgestaltungsformen der Erfindung, wobei der zweite Leistungspfad über einen Stirnradsatz an die Summierungsplanetenstufe 8 angeschlossen ist, während der erste Leistungspfad 4 unmittelbar in die Summierungsplanetenstufe 8 übergeht.

Der Stirnradsatz besteht aus einem ersten Zahnradsatz 10 sowie einem zweiten Zahnradsatz 11, wobei der erste Zahnradsatz 10 zwei miteinander in Eingriff stehende Zahnräder und der zweite Zahnradsatz 11 drei miteinander in Eingriff stehende Zahnräder aufweist, wodurch eine Umkehr der Rotationsrichtung erreicht wird. Zwischen dem ersten Zahnradsatz 10 und dem zweiten Zahnradsatz 11 ist ferner eine Nebenwelle 12 vorgesehen, die die beiden Zahnradsätze 10, 11 miteinander verbindet. Die Schalteinrichtung 7 ist als Lamellenkupplung realisiert, über die der erste Zahnradsatz 10 mit der Nebenwelle 12 koppelbar ist.

Auch in dem ersten Leistungspfad 4 ist eine Schalteinrichtung 6 als Lamellenkupplung vorgesehen, die die erste Welle 1 unmittelbar mit einer Lamellenwelle 13 koppelt. Diese Lamellenwelle ist Teil der Schalteinrichtung 9 der Summierungsplanetenstufe 8. Der Lamellenträger 14 steht unmittelbar mit dem Zahnradsatz 11 in Verbindung. Somit kann über die Schalteinrichtung 9 eine Kopplung der beiden Leistungspfade 4, 5 herbeigeführt werden, wobei dies nur dann möglich ist bzw. sinnvoll ist, wenn einer der beiden Leistungspfade entkoppelt ist, um einen Vorwärts- oder einen Rückwärtsgang (FWD, RWD) zu ermöglichen.

Die Lamellenwelle 13 steht sodann unmittelbar mit dem Sonnenrad 15 der Summierungsplanetenwelle in Verbindung und der Lamellenträger 14 mit dem ersten Planetenträger 16 der Summierungsplanetenstufe 8.

Die Summierungsplanetenstufe 8 weist ferner ein zweites Sonnenrad 17 auf, das mit der zweiten Welle 2 verbunden ist und über einen zweiten Planetenträger 18 mit dem ersten Planetenträger 16 der Summierungsplanetenstufe 8 verbunden ist.

Gemäß der Figur 3 ist anstelle einer Lamellenkupplung die Schalteinrichtung 9 über eine Synchronisierungseinheit gebildet, wobei die übrigen Bestandteile erhalten bleiben.

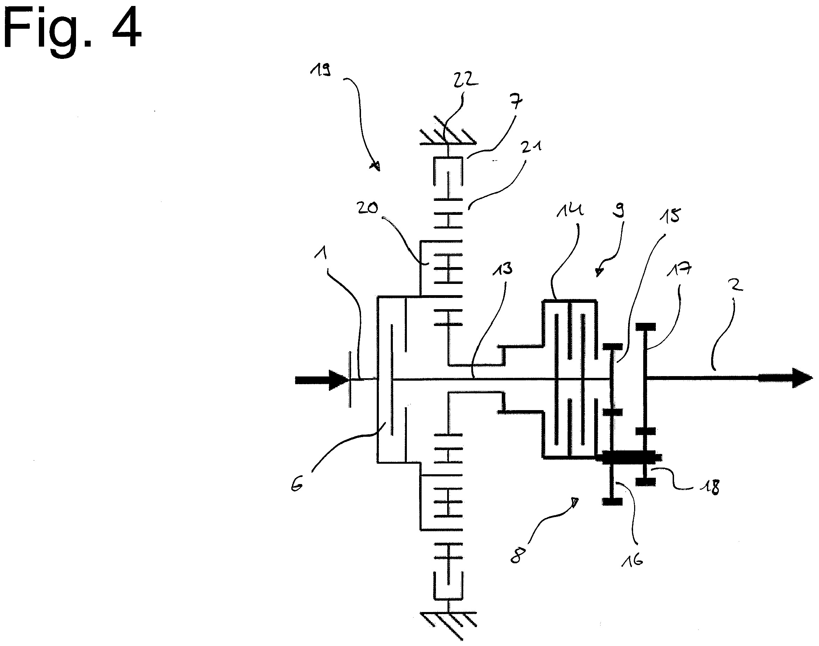

Die Figur 4 zeigt eine alternative Ausgestaltung der Schaltgruppe gemäß der Figur 2, wobei der erste Leistungspfad und der zweite Leistungspfad über eine Verzweigungsplanetenstufe 19 gebildet werden. Die erste Welle 1 kann hierbei erneut unmittelbar mit der Lamellenwelle 13 über die Schalteinrichtung 6 gekoppelt werden, wobei über die erste Welle 1 darüber hinaus auch ein Planetenträger 20 angetrieben wird, der mit dem Lamellenträger 14 in Verbindung steht. Durch Schaltung der Schalteinrichtung 7 wird ein Hohlrad 21 der Verzweigungsplanetenstufe 19 mit dem Gehäuse 22 unmittelbar verbunden und führt zu einer Umkehrung der Rotationsrichtung des Planetenträgers 20 und folglich zu einem Rückwärtsgang.

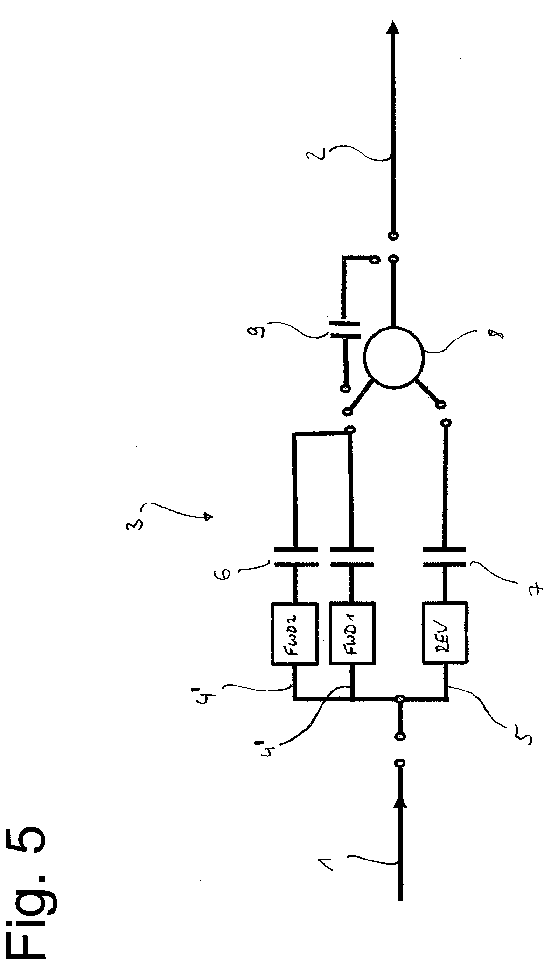

Die Figur 5 zeigt eine alternative Ausgestaltung gemäß der Figur 4, wobei zusätzlich zu dem ersten Leistungspfad 4' und dem zweiten Leistungspfad 5 nunmehr ein dritter Leistungspfad 4" vorgesehen ist, der analog zu dem Leistungspfad 4' ebenfalls als Vorwärtsgang (FWD2) ausgebildet ist.

## Patentansprüche

1. Getriebe mit einer ersten und einer zweiten Welle (1, 2) und einer zwischen den Wellen (1, 2) angeordneten Schaltgruppe (3), wobei die Schaltgruppe (3) derart ausgebildet ist, dass eine über die erste Welle (1) eingebrachte mechanische Leistung über einen ersten und/oder über einen zweiten zu- oder abkoppelbaren Leistungspfad (4, 5) auf die zweite Welle (2) übertragbar ist,
wobei der erste Leistungspfad (4) als Vorwärtsgang (FWD) und der zweite Leistungspfad (5) als Rückwärtsgang (RWD) eingerichtet ist,
und wobei der Vorwärtsgang (FWD) ein betragsmäßig unterschiedliches Übersetzungsverhältnis aufweist als der Rückwärtsgang (RWD),
**dadurch gekennzeichnet, dass** die Schaltgruppe (3) eine Summierungsplanetenstufe (8) aufweist, über die die mechanische Leistung der Leistungspfade (4, 5) auf die zweite Welle (2) übertragbar ist.

2. Getriebe nach Anspruch 1, **dadurch gekennzeichnet, dass** die Summierungsplanetenstufe (8) eine Schalteinrichtung (9) aufweist, die derart eingerichtet ist, dass der erste und der zweite Leistungspfad (4, 5) unmittelbar miteinander oder jeweils einer der Leistungspfade (4, 5) mit einem Ausgangspfad der Summierungsplanetenstufe (8) koppelbar sind, wobei der Ausgangspfad mit der zweiten Welle (2) in Verbindung steht.

3. Getriebe nach Anspruch 2, **dadurch gekennzeichnet, dass** die Summierungsplanetenstufe (8) zumindest zwei koaxial zueinander rotierbare Planeteneinheiten aufweist, die mit den Leistungspfaden (4, 5) in Verbindung stehen und die mittels der Schalteinrichtung (9) derart miteinander gekoppelt werden können, dass eine Rotation zwischen den Planeteneinheiten blockiert ist.

4. Getriebe nach Anspruch 3, **dadurch gekennzeichnet, dass** die Schalteinrichtung (9) eine Lamellenkupplung, eine Klauenkopplung oder eine Synchronisiereinheit ist.

5. Getriebe nach Anspruch 3 oder 4, **dadurch gekennzeichnet, dass** die Planeteneinheiten als Sonnenrad (15) und als Planetenträger (16) ausgebildet sind.

6. Getriebe nach Anspruch 5, **dadurch gekennzeichnet, dass** die Summierungsplanetenstufe (8) einen zweiten Planetenträger (18) aufweist, wobei die Planetenträger (16, 18) unmittelbar miteinander gekoppelt sind und wobei der zweite Planetenträger (18) oder ein zweites mit dem zweiten Planententräger (18) in Verbindung stehendes Sonnenrad (17) den Ausgangspfad der Summierungsplanetenstufe (8) bildet.

7. Getriebe nach einem der Ansprüche 1 bis 7, **dadurch gekennzeichnet, dass** der erste und/oder der zweite Leistungspfad (4, 5) jeweils aus einer Wellenanordnung gebildet ist, der entweder unmittelbar oder unter Einbindung eines Stirnradsatzes mit der Summierungsplanetenstufe (8) verbunden ist, wobei die Wellenanordnung jeweils eine Schalteinrichtung (6, 7) aufweist, über die die Wellenanordnung zu- oder abgekoppelt werden kann.

8. Getriebe nach einem der Ansprüche 1 bis 7, **dadurch gekennzeichnet, dass** der erste und der zweite Leistungspfad (4, 5) über eine Verzweigungsplanetenstufe (19) gebildet sind.

9. Getriebe nach einem der Ansprüche 1 bis 8, **dadurch gekennzeichnet, dass** die Schaltgruppe (6) einen dritten Leistungspfad (4") aufweist, wobei der dritte Leistungspfad (4") als Vorwärtsgang (FWD2) ausgebildet ist und ein gegenüber dem ersten Leistungspfad (4') unterschiedliches Übersetzungsverhältnis aufweist.

10. Getriebe nach einem der Ansprüche 1 bis 9, **dadurch gekennzeichnet, dass** die Schaltgruppe (6) eine zweite Summierungsplanetenstufe aufweist und wobei beide Summierungsplanetenstufen mit dem ersten und dem zweiten Leistungspfad (4, 5) in Verbindung stehen.
